# EUROPEAN PATENT APPLICATION

(11) **EP 2 314 892 A2**
(43) Date of publication of application: **27.04.2011**
(21) Application number: 10186012.0
(22) Date of filing: 01.10.2010
(51) Int. Cl.: F16B 45/00

(54) **A fastening assembly**

(30) Priority: 02.10.2009 GB 0917283
(71) Applicant: Raptorgrip Ltd., Leeds LS1 2DR (GB)
(72) Inventor: Owen, Peter Julian, Ickleton Saffron Walden (GB); Bloy, Jonathan, St Neots Cambridgeshire, PE19 6LT (GB)
(74) Representative: Hirsz, Christopher Stanislaw

(57) **Abstract**

A fastening assembly for attachment of objects to substrates (16) formed from weak or soft construction materials, such as plasterboard or chipboard, includes a bracket (1) having one or more apertures (3) and one or more longitudinal pins (8) having threaded head portions (10), which thread into corresponding apertures (3) in the bracket. The apertures (3) in the bracket (1) are either obround or star-shaped and may be punched out from the bracket (1). The pins (8) are arranged to pass into the substrate (2) at different angles through the apertures and their threaded heads lock with the walls of the apertures.

## Description

The present invention relates to a fastening assembly for the attachment of objects to a substrate, especially, though not exclusively weak or soft construction material substrates, especially such substrates as plasterboard or other friable or weak materials, such as chipboard or medium density fibreboard (mdf), although may also be used for wood.

It is generally appreciated that the use of plasterboard as a construction material has introduced difficulties for the support of wall mounted functional and decorative fittings and fixtures such as sinks, light fittings, bathroom furniture, curtain rails etc.

The friable nature of plasterboard means that it tends to crumble around the area adjacent a screw driven therein. This results in a loosening of the screw and thus of any bracket attached to it leaving both liable to fall out.

The problem is particularly acute where substantial load is placed onto the bracket, e.g. bathroom furniture such as a sink, or where the object is subjected to repeated or cyclic stresses.

In a similar manner, it is known that connecting chipboard or mdf together, or fastening objects to substrates made of chipboard or mdf or similar materials is difficult as, again, these materials tend to crumble around the area adjacent a screw driven therein, which results in a loosening of the screw and a reduction on the integrity of the connection or fastening.

Previous methods devised to overcome this problem include using large threaded screws or by clamping the bracket against both sides of the substrates.

CH693100 describes a bracket bent such that the apertures are aligned at an angle about 30°.

In orthopaedic surgery, it is known to use bracing plates having threaded apertures adapted to retain and lock a fastening screw. As described in US2001021951, these plates are used to brace broken bones to facilitate mending of fractures.

It is therefore an object of the present invention to provide a bracket and fastening devices for the bracket that will overcome, or at least reduce the disadvantages of the known systems.

Accordingly, in one aspect, the present invention provides a bracket for supporting an object onto substrate, the bracket comprising at least one substantially planar portion, the planar portion having a plurality of apertures therethrough, at least one of the apertures being defined by a zig-zag shaped wall to provide a generally star-shaped aperture.

Preferably, the at least one aperture is generally symmetrical about a central point. Alternatively, the at least one aperture is generally elongated in one direction.

In a second embodiement, the invention provides a bracket for supporting an object onto a substrate, the bracket comprising at least one substantially planar portion, the planar portion having a plurality of apertures therethrough, at least one of the apertures being defined by an obround shaped wall to provide a generally obround aperture.

Preferably, the at least one aperture has an axis through the planar portion of the bracket which diverges from perpendicular with respect to the plane of the planar portion. The axis of the at least one aperture is preferably at an angle of approximately 30° to 45° from perpendicular with respect to the plane of the planar portion.

In an embodiment, the planar portion is relatively thin so that the at least one aperture is punched through the planar portion.

Preferably, at least two of said apertures each having an axis through the planar portion of the bracket which diverges from the other.

In one embodiment, the bracket further comprises a part cylindrical guide for a fastening pin extending around at least a portion of the at least one aperture, an axis of the guide diverging from perpendicular with respect to the plane of the planar portion.

According to a second aspect, the invention provides a fastening pin comprising a threaded head portion having a thread configured in a conical helix, a threaded shank extending from the head to a tip having a cutting portion suitable for cutting into a substrate.

Preferably, the threaded head portion is enlarged or enlargening from the shank.

In a preferred embodiment, the threaded shank has a thread having a smaller external diameter than the thread of the head portion.

The head portion preferably defines a tool engageable structure for enabling the pin to be rotated into the substrate using a suitable tool.

In a third aspect, the invention provides a kit for supporting an object onto a substrate having a surface to which the object is to be supported, the kit comprising:
at least one fastening pin having a threaded head portion having a thread configured in a conical helix and a shank extending from the head to a tip having a cutting portion;
a bracket according as described above, the wall of the at least one aperture being engageable with the threaded head of the fastening pin;
wherein the shank of the fastening pin is adapted to pass through the at least one aperture and into the substrate; and
engagement of the threaded head of the fastening pin with the wall of the at least one aperture in the bracket causes locking of the fastening pin to the bracket.

The fastening pin preferably comprises a fastening pin as described above.

Preferably, the bracket has three or more generally star-shaped or obround apertures and the kit comprises three or more fastening pins arranged such that each fastening pin will protrude into the substrate at an angle divergent from the other two fastening pins.

In one embodiment, the bracket has a generally planar surface for abutting the substrate surface and at least one of the generally star-shaped or obround apertures has an axis which diverges from perpendicular with respect to the bracket surface.

The bracket is preferably configured to support any of wall fittings, wall fixtures, ceiling fittings, supporting bathroom furniture, or curtain rails.

Alternatively, the bracket may be configured to connect elements of furniture, which may be flat pack furniture, together, or the bracket may be configured to support door fixings and fittings, such as door handles and door hooks.

In a preferred embodiment, the kit further comprises a guide adapter for directing at least one of a plurality of fastening pins into at least one of the generally star-shaped or obround apertures at an angle which diverges from perpendicular with respect to the substantially planar portion of the bracket.

Preferably, the guide adapter directs at least two of the plurality of fastening pins into at least two of the generally star-shaped or obround apertures at mutually divergent angles.

In one embodiment, the adapter comprises a first surface for abutting against the planar portion of the bracket and an opposed second surface spaced therefrom, the first and second surfaces having apertures therein for directing at least one of a plurality of fastening pins into at least one of the generally star-shaped or obround apertures at an angle which diverges from perpendicular with respect to the substantially planar portion of the bracket.

Preferably, the guide adapter comprises a generally cuboid structure with the apertures in the first and second surfaces being joined by generally cylindrical guide walls extending between the first and second surfaces.

The guide adapter may further comprise a plurality of guide ribs extending radially inwardly from the generally cylindrical guide wall.

According to a further aspect, the invention provides a method of supporting an object onto a substrate using a kit as described above.

Preferbaly, the dimensions of the fastening pins are chosen such that when the fastening pins are passed through the generally star-shaped or obround apertures in the bracket and into the substrate, a portion of a pin protrudes through an opposite side of the substrate before the threaded head and aperture wall engage.

Preferably, the shank of the fastening pin is selected to have a length greater than the thickness of the substrate.

The fastening pins may be passed through pre-formed passages in the substrate.

In one embodiment, the fastening pins are guided into the star-shaped or obround apertures using a guide adapter as described above.

The substrate may be formed of a weak or soft construction material.

The term 'bracket' in the context of this specification will be taken to mean a support or connector adapted to be affixed to a substrate forming a wall, ceiling or other similar surface, or to a door, doorframe or other building element, or to a part of furniture, for example flat pack furniture, so as to hold or bear the weight of an object mounted thereto.

Locking of the fastening pin directly to the bracket prevents or at least substantially inhibits the ability of the fastening pin to move independently from the bracket and therefore improves the bracket's retention to the substrate.

The locking action may take the form of a frictional tightening between the fastening pin and the bracket in addition to the frictional contact that is typically experienced between the cooperation of two threads.

Having the thread defined on the head allows the fastening means to be partially or fully received within the aperture thereby enabling an object to be mounted onto the bracket without being obstructed by a protruding fastening means.

The kit may be used to support any of wall fittings, such as picture or coat hooks; ceiling fittings, such as hanging light fittings; wall fixtures such as wall lights, shelving, wall-mounted televisions or other display screens; supporting bathroom furniture, such as toilet roll holders, towel rails, boilers, cisterns or radiators; and/or curtain rails. The kit may also be used for supporting door fixings, such as hooks or door handles.

Alternatively, the kit may be used for putting together flat pack furniture and furniture, generally. In this case, it will be apparent that the bracket is used for connecting different elements forming the furniture..

The invention will now be described by way of embodiment with reference to the following figures in which:
**Figure 1** is a plan, side and bottom view of a fastening pin for attaching a bracket to a substrate according to one embodiment of the present invention;
**Figure 2** is a plan, side and bottom view of a second fastening pin for attaching a bracket to a substrate according to one embodiment of the present invention;
**Figure 3** is a top plan view of a bracket according to one embodiment of the present invention;
**Figure 4** is a top plan view of a bracket according to second embodiment of the present invention;
**Figure 5** is a top plan view of a bracket according to third embodiment of the present invention;
**Figure 6** is an end edge view of the bracket of Figure 5;
**Figure 7** is a bottom plan view of the bracket of Figure 5;
**Figure 8** is a side edge view of the bracket of Figure 5;
**Figures 9 to 12** similar views to Figures 5 to 8 of the bracket with fastening pins passing therethrough;
**Figures 13 to 16** are similar views to Figures 9 to 12 with the fastening pins passing through the bracket at a different angle to that of Figures 9 to 12.;
**Figures 17 to 20** are similar views to Figures 5 to 8 of a bracket according to a fourth embodiment of the invention;
**Figures 21 to 24** are similar views to Figures 17 to 20 of the bracket with fastening pins passing therethrough;
**Figures 25 to 28** are similar views to Figures 5 to 8 of a bracket according to a fifth embodiment of the invention with a guide adapter in position to guide fastening pins into the bracket;
**Figures 29 to 32** are similar views to Figures 25 to 28 of the bracket with a different guide adapter in position after the fastening pins have been guided into the bracket; and
**Figures 33 to 36** are similar views to Figures 25 to 28 of the bracket with the guide adapter removed after the fastening pins have been guided into the bracket.

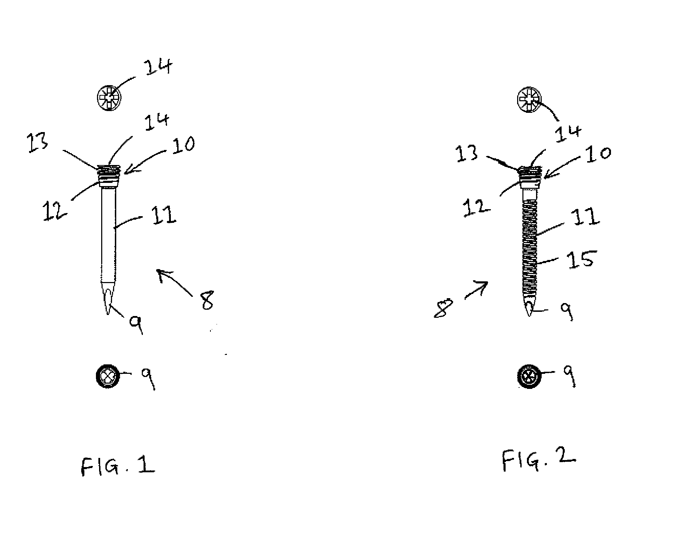

Thus, Figure 1 shows a fastening pin for fastening a bracket to a substrate. The fastening pin 8 has a cutting portion 9 and an enlarged head portion 10 at either end of a shank 11. Head portion 10 defines shoulders 12 defining a conical external thread 13. Defined within the end of head portion 10 is a recess 14 shaped for engagement with a tool e.g. screwdriver such as a Philips cross-screw, Allen key etc.

The size of head portion 10 and slope of shoulder portions 12 are chosen to allow the head 10 to seat within an aperture in the bracket such that thread 13 is engagable with the edges of the apertures as will be more fully described hereafter.

Figure 2 shows a similar fastening pin to that of Figure 1, but, in this case, the shank 11 is provided with a thread 15 having an external diameter smaller than that of the head portion 10.

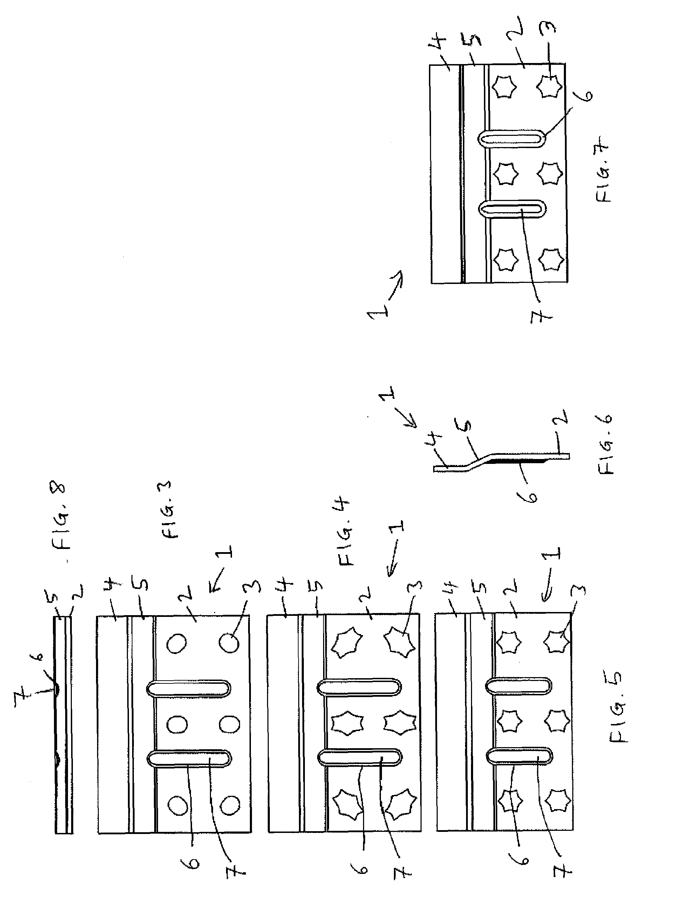

Figure 3 illustrates a first embodiment of a bracket 1 having a substantially planar portion 2 having a plurality of apertures 3. In this case six such apertures 3 are shown, but it will be appreciated that any appropriate number could be provided depending on the application, though it is preferred that at least two, preferably at least three apertures are used. As best seen in Figure 6, the bracket 1 includes a hook portion 4 substantially parallel to the planar portion 2 and joined thereto by an angled joining portion 5. Strengthening ribs 6 are provided in the planar portion 2 surrounding elongate apertures 7 used to reduce the overall weight of the bracket 1. The apertures 3 are obround shaped defined by an obround shaped wall. The apertures may be punched out from the planar portion 2 of the bracket 1 or may be otherwise formed depending on the thickness of the planar portion 2.

Figure 4 illustrates a second embodiment of a bracket 1 similar to that of Figure 3, with the same elements having the same reference numerals as in Figure 3. The elements which are the same will not be described again. As can be seen, in this embodiment, the apertures are generally elongate star-shaped defined by a zig-zag shaped wall. Figures 5 to 8 illustrate a third embodiment of a bracket 1, again with the same elements (which will not be described again) having the same reference numerals as in Figure 3. The apertures 3 are again star-shaped defined by zig-zag shaped walls, but in this embodiment, they are not elongate, but generally symmetrical about a central point.

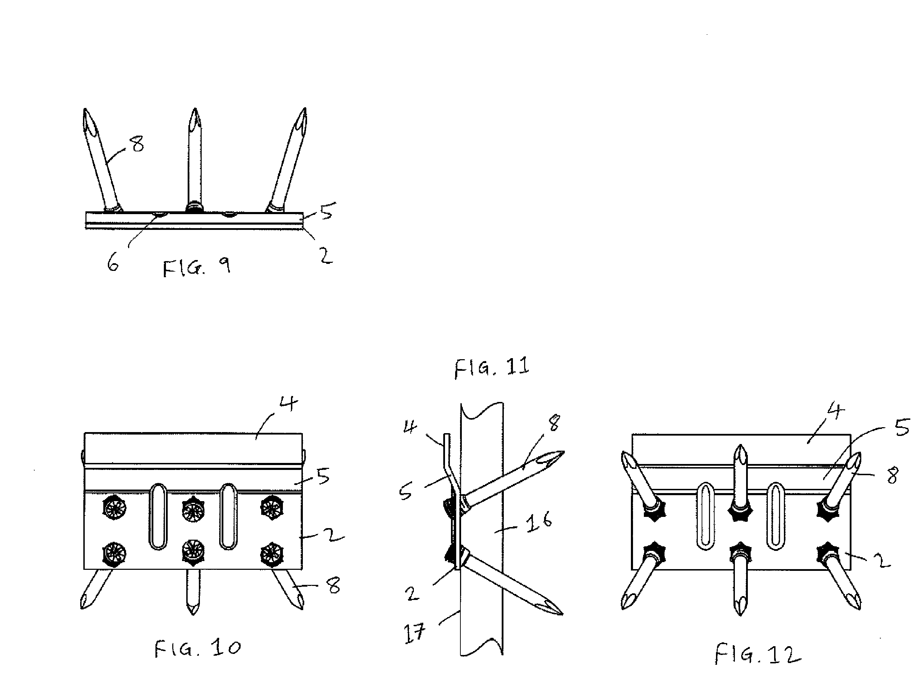

Figures 9 to 12 show the bracket of the third embodiment with very similar views to those of Figures 5 to 8, but with fastening pins 8 similar to those of Figure 1 inserted through the apertures. As can be seen, the pins are driven into the substrate 16, shown in Figure 11, but not shown in Figures 9, 10 and 12 for clarity, at diverging angles. In particular, in this case, the pins are arranged to diverge at an angle of about 30° to the perpendicular to the planar portion 2 of the bracket, or to the surface 17 of the substrate 16 against which the planar portion 2 abuts. In this example, it can be seen that the outer pins of each of the two rows of three pins also diverge from the other pins in that row. The divergence of the pins provides much greater strength of fastening of the bracket to the substrate than pins that are driven into the substrate in parallel and perpendicular to the surface of the substrate. As the pins 8 are rotated into the substrate 16, the shank of the pins passes through the apertures, but the threaded head with its thread configured in a conical helix begins to engage the side wall of the aperture 3. In the case of the star-shaped apertures, it first engages with the innermost points of the zig-zag shaped wall and, as the fastening pin 8 is rotated further, the thread on the head portion engages further with the wall of the aperture and locks with it.

The angle at which the fastening pins are driven into the substrate can be determined by a guide adaptor, as will be described further below, or by the shape and size of the aperture. Thus, for example, the elongate star-shaped apertures of the second embodiment of the bracket, or the obround apertures of the first embodiment guide the fastening pins to be driven at an angle along the direction that they are elongate in. Of course, if the planar portion has a sufficient thickness, then the apertures can be formed with an axis through the planar portion of the bracket which diverges from perpendicular with respect to the plane of the planar portion. This will also guide the fastening pin being driven through the aperture to go through the substrate at an angle that diverges from the perpendicular.

Where possible, the length of the pins 8 are chosen such that the cutting portion 9 will protrude through to the other side of the substrate 16 before the threads 13 engage with the wall of the apertures 3. This is to preclude rotation of the pin 8 causing the bracket to be raised away from the surface of the substrate rather than causing the cutting portion 9 to penetrate further into the substrate 16. Where an adequate pin length can not be selected because the substrate is very thick, e.g. a breeze block, the hole may be predrilled before the pin is inserted.

To affix the bracket 1 to the substrate 16, the portion of the bracket defining the apertures 3 is held generally flush against the surface 17 of the substrate 16. A pin 8 is first positioned within aperture 3 and driven into the substrate 16 as a temporary fix. In some cases, a first pin may be driven in perpendicularly to enable easier first entry into the substrate surface 17 whilst the bracket 1 is not self-supported. Cutting portion 9 of the pin 8 acts to bore a channel in the substrate 16 for the shank 11 to pass through. Once the first pin 8 is secured, the remaining pins can be located and driven in.

Each pin 8 is driven until head 10 seats sufficiently into the aperture 3 that conical threads 12 are engaged. Further driving of the pin 8 causes the shoulder/thread 12, 13 to forcefully abut and be compressed against the wall of the aperture. This may also be accompanied by slight plastic deformation of the pin/thread 8/12 and/or the wall of the aperture 3.

With the pin 8 locked to the bracket 1, a substantially increased level of torque is required to rotate the pin 8 out from the locked position. This inhibits independent movement of the pin 8 from the bracket 1 and vice-versa thereby inhibiting the bracket's 1 ability to be moved from its affixed position.

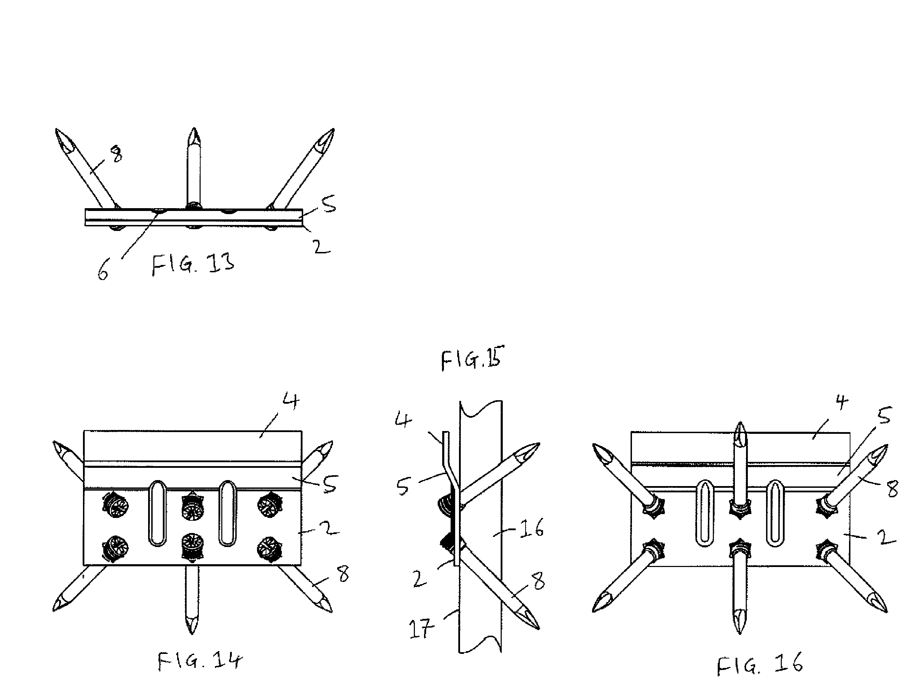

Figures 13 to 16 show essentially the same embodiment as Figures 9 to 12, but where the pins are driven into the substrate 16 at an angle of about 45° to the perpendicular to the planar portion 2 of the bracket, or to the surface 17 of the substrate 16 against which the planar portion 2 abuts. Again, it can be seen that the outer pins of each of the two rows of three pins also diverge from the other pins in that row.

Because each of the pins 8 diverge, movement of the bracket 1 away from its fixed position will be will be resisted as the vector of the force will be at least partially transverse to the axis of at least one of the pins. Equally, as the pins are locked to the bracket 1, stress upon the bracket will not allow subsequent movement or play of the pins 8 which would otherwise accelerate loosening.

Modifications of the above assembly are possible, for example, the bracket may comprise any number of apertures 3 for receiving the corresponding number of pins 8, however it is preferred that at least three pins are used to achieve adequate attachment.

Although preferred, it is not necessary for all three pins to diverge and be located in more than one plane. For example, if there are two pins and apertures, they could be parallel, although extending non-perpendicularly to the bracket. In this case, both pins could extend downwardly into the substrate, so that the weight of the bracket (and whatever is supported on the bracket) is used to maintain the bracket in position against the plasterboard.

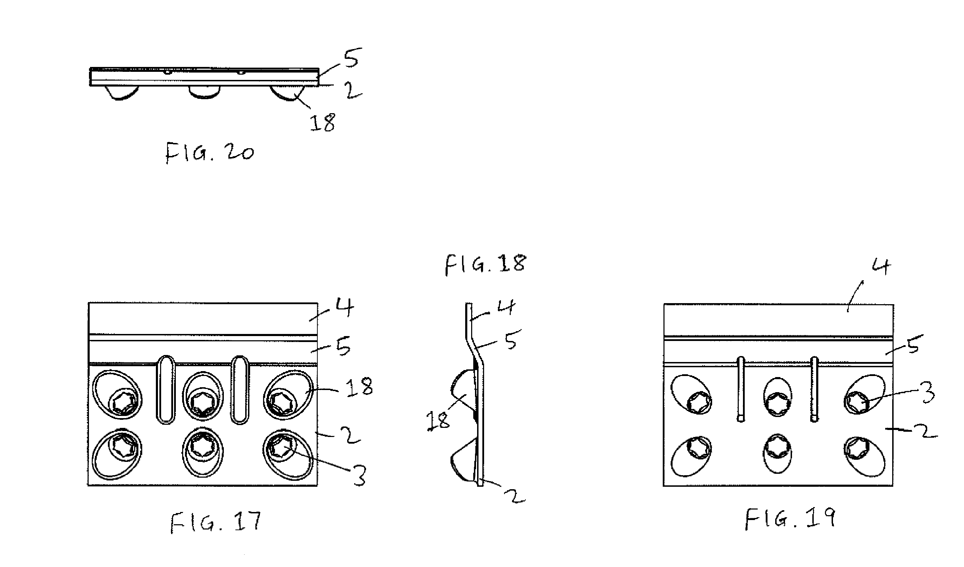

In a fourth embodiment, as shown in Figure 17 to 20, an upper surface of the planar portion 2, opposite to a surface that abuts the surface 17 of the substrate 16, may be provided with guides 18 around each aperture 3. The guides 18 are preferably part cylindrical in shape and extend at an angle around at least part of the apertures 3. In this way, they can guide the respective fastening pin entering the respective aperture at the correct angle to diverge from the perpendicular to the planar portion. Thus, the pin can be guided at the correct angle, irrespective of whether the aperture itself is formed with an axis through the planar portion at an angle that diverges from the perpendicular, or whether the aperture is formed in a relatively thin planar portion and is simply punched out of the material forming the planar portion. In the latter case, the guides 18 can, of course, be punched out of the material forming the planar portion, being formed by the same punching operation as that forming the apertures and being formed from the material punched out to form the apertures.

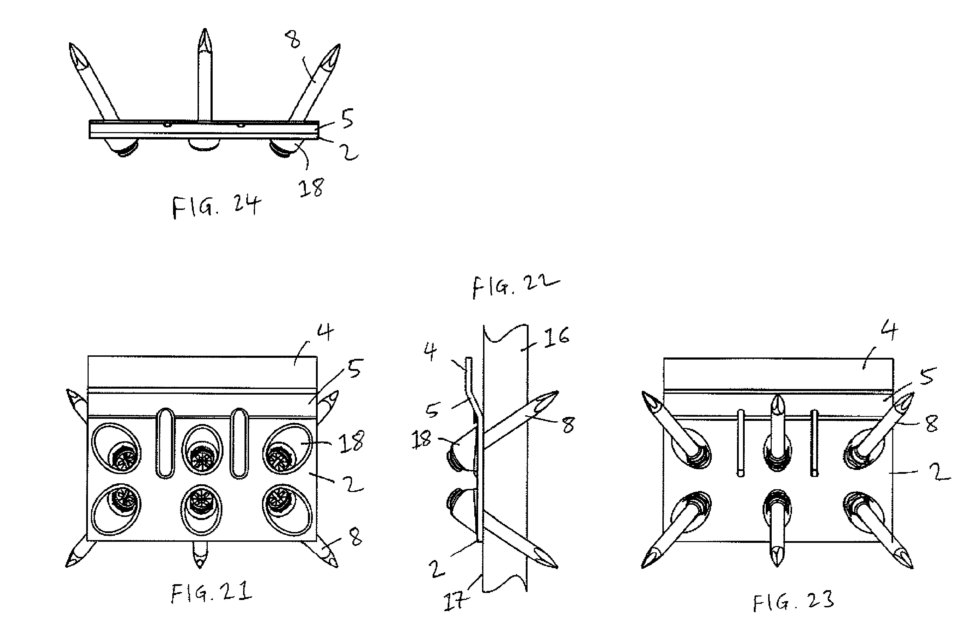

Figures 21 to 24 show the bracket of the fourth embodiment with very similar views to those of Figures 17 to 20, but with fastening pins 8 inserted through the apertures 3.

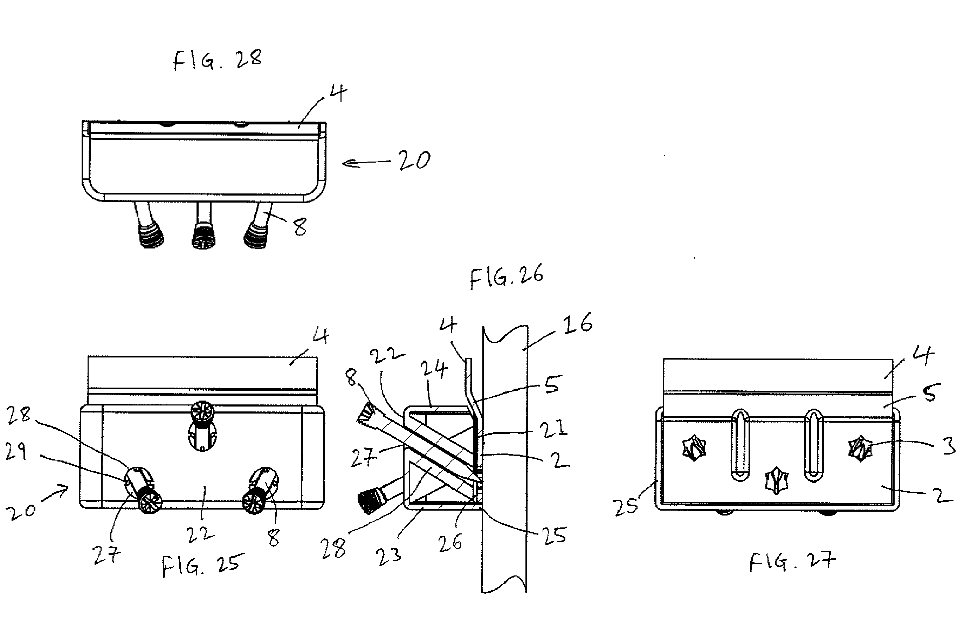

Figures 25 to 28 show similar views to those of Figures 5 to 8, but, in this case, the bracket 1 is provided with only three apertures 3. The apertures 3 are shown as having a generally symmetrical star-shape, although any of the previously described shapes could be used instead. Figures 25 to 28 show a guide adapter 20 having a generally cuboid or box-like structure with a first surface 21 for abutting against the upper surface of the planar portion 2 of the bracket 1, and an opposed second surface 22 spaced apart from the first surface 21. The first and second opposed surfaces 21, 22 are connected by side walls 23, 24, which may extend beyond the first surface to provide an abutting wall 25 for abutting an edge of the planar portion 2 in order to easily position the guide adapter 20 over the planar portion 2. The first and second surfaces 21, 22 are provided with corresponding apertures 26, 27 offset with respect to each other through which the fastening pins 8 are positiond so as to be guided into the generally star-shaped or obround apertures at angles which diverges from perpendicular with respect to the planar portion 2 of the bracket. The corresponding apertures are joined by generally cylindrical guide walls 28 extending between the first and second surfaces 21, 22. Each cylindrical guide wall 28 is provided with a plurality of guide ribs 29 extending radially inwardly so as to abut the fastening pin 8 but to provide less frictional resistance to its rotation as it is being driven into the substrate than if the pin contacted the whole of the guide wall 28.

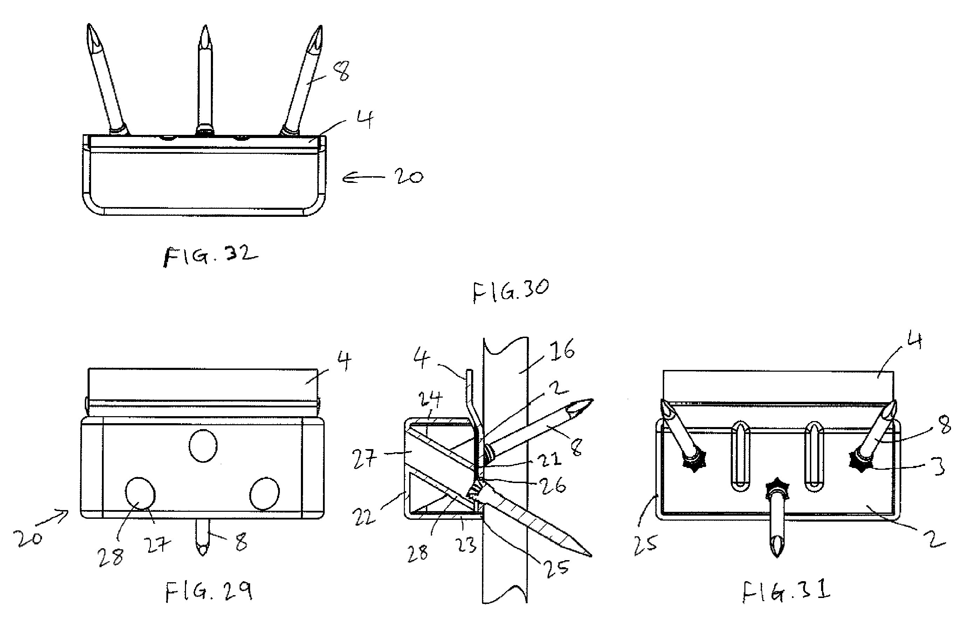

Figures 29 to 32 show similar views to those of Figures 25 to 28, but, in this case, the cylindrical guide walls 28 do not have the guide ribs 29. Furthermore, the pins 8 are shown having been driven into the substrate 16.

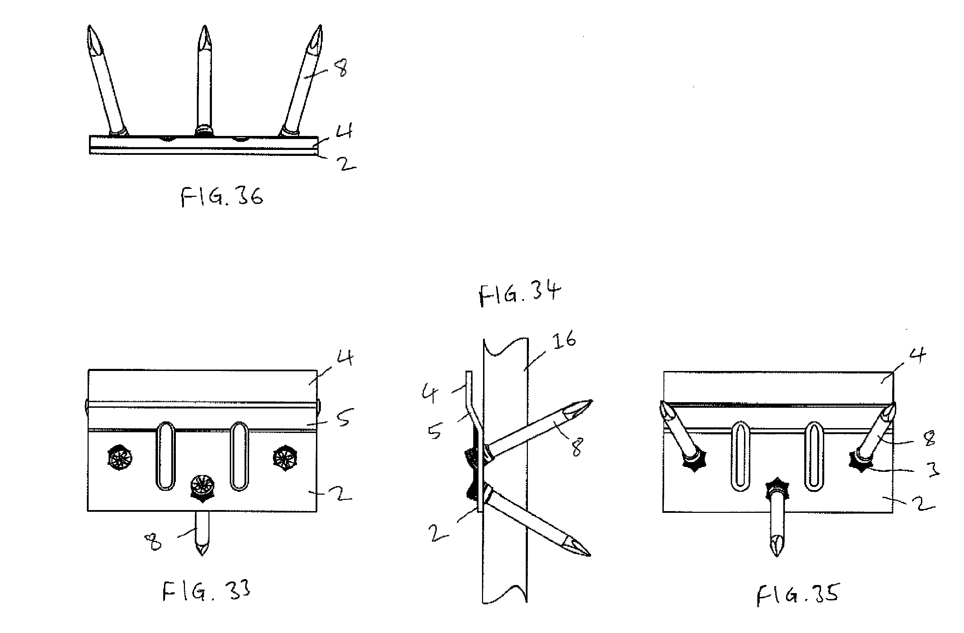

Finally, Figures 33 to 36 show similar views to those of Figures 29 to 32, but, in this case, the guide adapter 20 has been removed after the pins have been driven into the substrate 16. Accordingly, these Figures are substantially the same as the views shown in Figures 9 to 12, except for the number of apertures 3 in the bracket 1.

It will be appreciated, that although the fastening pins shown with respect to most of the embodiments are similar to the pin of Figure 1, the pin of Figure 2 could alternatively be used. In this case, the thread 15 on the shank 11 of the pin 8 will engage with the substrate 16. The invention may equally be applied to other forms or shapes of bracket other than that shown. For example, they could be 'L' shaped, or of any other suitable shape, depending on the application for which they are to intended be used.

The fastening kit, although especially useful for weak or soft construction material substrates, especially such substrates as plasterboard or other friable or weak materials, such as chipboard or medium density fibreboard (mdf), may also be used for wood (whether softwood or hardwood.

By having pins of different lengths available, it is easy to fix the brackets to hollow walls or doors, or to solid ones, even if there is a construction material deeper behind the substrate through which the pins cannot pass, e.g a metal lintel over a door or window frame where a curtain fixing bracket may be placed. In this case, a shorter pin is chosen, which does not reach the metal lintel and the hole formed remains small in diameter and the plasterboard is not damaged as happens when a screw or rawlplug is screwed into a wall and then encounters the lintel, at which point it rotates without moving deeper and damages the hole already made.

Finally, in many instances, precise bracket placement is achieved without the necessity for prior measurement and marking of the wall, because a rapid, easy placement on the wall is achieved, with immediate fixing of the pins to the substrate.

It will also be appreciated that although only a few particular embodiments of the invention have been described in detail, various modifications and improvements can be made by a person skilled in the art without departing from the scope of the present invention.

## Claims

1. A bracket for supporting an object onto a substrate, for example of a weak or soft construction material, the bracket comprising at least one substantially planar portion, the planar portion having a plurality of apertures therethrough, at least one of the apertures being defined by a zig-zag shaped wall to provide a generally star-shaped or obround aperture.

2. A bracket according to claim 1, wherein the at least one aperture is generally symmetrical about a central point, and/or is generally elongated in one direction.

3. A bracket according to either claim 1 or claim 2, wherein the at least one aperture has an axis through the planar portion of the bracket which diverges from perpendicular with respect to the plane of the planar portion, and wherein the axis of the at least one aperture is preferably at an angle of approximately 30° to approximately 45° from perpendicular with respect to the plane of the planar portion.

4. A bracket according to any preceding claim, wherein the planar portion is relatively thin so that the at least one aperture is punched through the planar portion.

5. A bracket according to any preceding claim, wherein there are at least two of said apertures each having an axis through the planar portion of the bracket which diverges from the other.

6. A bracket according to any preceding claim, further comprising a part cylindrical guide for a fastening pin extending around at least a portion of the at least one aperture, an axis of the guide diverging from perpendicular with respect to the plane of the planar portion.

7. A fastening pin for a bracket according to any preceding claim, comprising a threaded head portion having a thread configured in a conical helix, a threaded shank extending from the head to a tip having a cutting portion suitable for cutting into a substrate, for example of a weak or soft construction material.

8. A fastening pin according to claim 7, wherein the threaded head portion is enlarged or enlargening from the shank, and/or has a thread having a smaller external diameter than the thread of the head portion.

9. A fastening pin according to either claim 7 or claim 8, wherein the head portion defines a tool engageable structure for enabling the pin to be rotated into the substrate using a suitable tool.

10. A kit for supporting an object onto a substrate having a surface to which the object is to be supported, the kit comprising:
at least one fastening pin having a threaded head portion having a thread configured in a conical helix and a shank extending from the head to a tip having a cutting portion;
a bracket according to any one of claims 1 to 6, the wall of the at least one aperture being engageable with the threaded head of the fastening pin;
wherein the shank of the fastening pin is adapted to pass through the at least one aperture and into the substrate; and
engagement of the threaded head of the fastening pin with the wall of the at least one aperture in the bracket causes locking of the fastening pin to the bracket.

11. A kit according to claim 10, wherein the fastening pin comprises a fastening pin according to any one of claims 7 to 9.

12. A kit according to either claim 10 or claim 11, wherein the bracket has three or more generally star-shaped or obround apertures and the kit comprises three or more fastening pins arranged such that each fastening pin will protrude into the substrate at an angle divergent from the other two fastening pins, and/or wherein the bracket has a generally planar surface for abutting the substrate surface and at least one of the generally star-shaped or obround apertures has an axis which diverges from perpendicular with respect to the bracket surface.

13. A kit according to any one of claims 10 to 12, wherein the bracket is configured to support any of wall fittings, wall fixtures, ceiling fittings, supporting bathroom furniture, curtain rails, door fixings and fittings, such as door handles and door hooks, or to connect elements of furniture together, for example, flat pack furniture.

14. A method of supporting an object onto a substrate, for example of a weak or soft construction material, using a kit according to any one of claims 10 to 13.

15. A method according to claim 14, wherein the dimensions of the fastening pins are chosen such that when the fastening pins are passed through the generally star-shaped or obround apertures in the bracket and into the substrate, a portion of a pin protrudes through an opposite side of the substrate before the threaded head and aperture wall engage.

16. A method according to claim 15, wherein the shank of the fastening pin is selected to have a length greater than the thickness of the substrate, and preferably where the fastening pins are passed through pre-formed passages in the substrate.
